# EUROPEAN PATENT SPECIFICATION

(11) **EP 1 766 717 B1**
(45) Date of publication and mention of the grant of the patent: **31.03.2010**
(21) Application number: 05746057.8
(22) Date of filing: 27.05.2005
(51) Int. Cl.: H01M 10/052, H01M 10/42, H01M 4/02

(54) **ADDITIVES FOR LITHIUM SECONDARY BATTERY**
ZUSATZSTOFFE FÜR EINE LITHIUM-SEKUNDÄRBATTERIE
ADDITIFS POUR ACCUMULATEUR AU LITHIUM

(30) Priority: 28.05.2004 KR 2004038374; 29.12.2004 KR 2004115350
(43) Date of publication of application: 28.03.2007
(73) Proprietor: LG Chem, Ltd., Youngdungpo-gu, Seoul 150-721 (KR)
(72) Inventor: KIM, Dong-Myung, 103-1401, Hwangsil Apartment, Daejeon 302-280 (KR); YOON, Jong-Moon, 102-802, Neulpureun Apartment, Daejeon 301-110 (KR); KIM, Yong-Jeong, 111-1108, Sejong Apartment, Daejeon 305-390 (KR); CHO, Benjamin, 513-802, Samsung 5-cha Apartment, Yongin-si, Gyeonggi-do 449-785 (KR); JEONG, Jun-Yong, 107-408, Hanbat Garden Apartment, Daejeon 301-756 (KR); JEONG, Dae-June, Busan 617-060 (KR); BAE, Joon-Sung, LG Chemical Development Corp., Daejeon 305-380 (KR)
(74) Representative: Cabinet Plasseraud
(86) International application number: PCT/KR2005/001557
(87) International publication number: WO 2005/117198

(56) References cited:
- EP-A- 1 189 299
- EP-A- 1 324 418
- EP-A- 1 463 143
- JP-A- 2003 249 264
- KR-A- 2003 079 736
- US-A- 5 464 705
- US-A- 5 691 080
- US-A- 2001 024 757
- US-A1- 2003 113 613
- US-A1- 2003 157 411
- US-A1- 2004 013 946

## Description

### Technical Field

The present invention relates to a lithium secondary battery, preferably a high-voltage battery with charge-cutoff voltages over 4.35V, which has improved high-temperature cycle characteristics, safety and high-temperature storage characteristics. More particularly, the present invention relates to a lithium secondary battery using an electrolyte comprising a compound with a reaction potential of 4.7V or higher in addition to a nitrile group-containing compound, wherein the compound with a reaction potential of 4.7V or higher solves the problems of a battery swelling phenomenon and drop in the recovery capacity under high-temperature storage conditions, such problems being caused by the nitrile group-containing compound used in the electrolyte for improving the high-temperature cycle characteristics and safety.

### Background Art

Recently, as electronic devices become smaller and lighter, batteries used therein as power sources are increasingly required to have a compact size and light weight. As rechargeable batteries with a compact size, light weight and high capacity, lithium secondary batteries have been put to practical use and widely used in portable electronic and communication devices such as compact camcorders, portable phones, notebook PCs, etc.

A lithium secondary battery comprises a cathode, anode and an electrolyte. Such lithium secondary batteries are capable of repeated charge/discharge cycles, because lithium ions deintercalated from a cathode active material upon the first charge cycle are intercalated into an anode active material (for example, carbon particles) and deintercalated again during a discharge cycle, so that lithium ions reciprocate between both electrodes while transferring energy.

Generally, in order to convert a lithium secondary battery having a charge cut-off voltage of 4.2V into a high-capacity, high-output and high-voltage battery having a charge-cutoff voltage of 4.35V or higher, it is necessary to increase the theoretically available capacity of the cathode active material in the battery. Methods of increasing the available capacity of a cathode active material include a method of doping a cathode active material with transition metals or non-transition metals such as aluminum and magnesium or a method of increasing the charge-cutoff voltage of a battery. It is possible to increase the available capacity of a cathode active material by 15% or more by increasing the charge-cutoff voltage of a lithium secondary battery to 4.35V or higher. However, because the reactivity between a cathode and electrolyte also increases, degradation of the cathode surface and oxidation of the electrolyte may occur, resulting in degradation in high-temperature cycle characteristics, safety and high-temperature storage characteristics of the battery.

Meanwhile, a lithium secondary battery having a charge-cutoff voltage of 4.2V according to the prior art uses an overcharge inhibiting agent such as cyclohexylbenzene (CHB) or biphenyl (BP) in order to improve the battery safety and to prevent side reactions between a cathode and electrolyte by forming a coating layer on the cathode under high-temperature storage conditions. However, when additives having a reaction potential of about 4.6V (for example, CHP or BP) are used in a high-voltage battery having a charge-cutoff voltage of 4.35V or higher, cycle characteristics of the battery may be degraded rapidly at room temperature and high temperature. Additionally, such additives may be decomposed excessively under high-temperature storage conditions to form a thick insulator film preventing movements of lithium ions on the cathode, so that any recovery capacity cannot be obtained.

Published US patent application 2004/0013946 teaches a hybrid thin film polymer electrolyte for lithium rechargeable batteries comprising a polymer gel that contains within the polymer gel structure a solution comprising ethylene carbonate, an organonitrile compound, such as succinonitrile, and at least one lithium salt having having a polarisable anion.

Published US patent application 2003/157411 teaches a polymer electrolyte including a particular polyester(meth)acrylate, a peroxide having 6 to 40 carbon atoms and an electrolytic solution including a lithium salt and an organic solvent. The organic solvent may include florinated aromatic hydrocarbon compounds, such as 2-FT, 3-FT, 4-FT, 2-fluorobenzene, 3-fluorobenzene, and 4-fluorobenzene, in order to improve the low-temperature characteristic of a lithium battery.

### Brief Description of the Drawings

The foregoing and other objects, features and advantages of the present invention will become more apparent from the following detailed description when taken in conjunction with the accompanying drawings in which:
FIG. 1 is a graph showing the high-temperature (45°C) cycle characteristics of each of the 4.35V-battery using no additive for electrolyte according to Comparative Example 1 and the 4.35V-battery using succinonitrile as additive for electrolyte according to Comparative Example 2;
FIG. 2 is a graph showing the high-temperature (45°C) cycle characteristics of the 4.35V-battery using succinonitrile and 3-fluorotoluene as additives for electrolyte according to Example 1;
FIG. 3 is a graph showing the results of the overcharge test for the 4.35V-lithium secondary battery according to Comparative Example 1 under 6V/1A conditions;
FIG. 4 is a graph showing the results of the overcharge test for the 4.35V-lithium secondary battery according to Comparative Example 1 under 12V/1A conditions;
FIG. 5 is a graph showing the results of the overcharge test for the lithium secondary battery according to Comparative Example 2 under 12V/1A conditions;
FIG. 6 is a graph showing the results of the overcharge test for the 4.35V-lithium secondary battery according to Example 1 under 18V/1A conditions;
FIG. 7 is a graph showing the results of the hot box test (150°C) for the lithium secondary battery according to Comparative Example 1;
FIG. 8 is a graph showing the results of the hot box test for the lithium secondary battery according to Comparative Example 2;
FIG. 9 is a graph showing the results of the hot box test for the lithium secondary battery according to Example 1;
FIG. 10 is a graph showing the results of the long-term high-temperature storage test (30 cycles= 1 cycle: 80°C/3 hr + room temperature/7 hr) for each of the lithium secondary batteries according to Example 1 and Comparative Examples 2 and 3; and
FIG. 11 is a graph showing the results of the long-term high-temperature storage test (80°C/5 days) for each of the lithium secondary batteries according to Example 1 and Comparative Examples 2 and 3.

### Disclosure of the Invention

We have first recognized that when a nitrile group-containing compound, particularly an aliphatic dinitrile compound, is used as additive for electrolyte in order to prevent degradation in safety and quality of a high-voltage battery having a charge-cutoff voltage of 4.35V or higher, there are problems of a battery swelling phenomenon and a significant drop in recovery capacity under high-temperature storage conditions.

Additionally, we have also found that when a compound having a reaction potential of 4.7V or higher, for example a fluorotoluene compound, is added to an electrolyte containing a nitrile group-containing compound added thereto, it is possible to prevent the problems of a battery swelling phenomenon and a significant drop in capacity under high-temperature storage conditions, the problems being caused by the nitrile-group containing compound used for the purpose of improving high-temperature cycle characteristics and safety of the battery.

Therefore, it is an object of the present invention to provide a lithium secondary battery having excellent high-temperature cycle characteristics and safety and improved high-temperature storage characteristics.

According to an aspect of the present invention, there is provided a lithium secondary battery comprising a cathode (C), an anode (A), a separator and an electrolyte, wherein the electrolyte comprises (a) a nitrile group-containing compound, and (b) a compound having a reaction potential of 4.7V or higher.

Hereinafter, the present invention will be explained in more detail.

The lithium secondary battery according to the present invention is characterized by the features of claim 1.

Due to the above characteristics of the present invention, the lithium secondary battery according to the present invention can show improved overall qualities including high-temperature cycle characteristics and high-temperature storage characteristics simultaneously with improved safety.
(1) In the lithium secondary battery according to the present invention, the nitrile group-containing compound used in the electrolyte can improve the battery quality at high-temperature as well as the battery safety.
   The highly polar nitrile group (-CN) present in the nitrile group-containing compound used in the present invention can be bonded with the surface of a cathode at high temperature, thereby forming a complex. The complex formed as descried above can serve as protection film for masking the active sites of the cathode surface, and thus can prevent transition metals from being partially dissolved out during repeated charge-discharge cycles to be precipitated on the anode. Additionally, it is possible to inhibit side reactions between an electrolyte and cathode followed by gas generation and to cause lithium ions to be intercalated/deintercalated smoothly even at high temperature, and thus to prevent degradation in cycle life characteristics.
   Further, the nitrile group-containing compound inhibits the heat generated from the reaction between an electrolyte and cathode and from the structural collapse of a cathode, and reduces the calorific value caused by the heat. Therefore, it is possible to prevent accelerated combustion of an electrolyte and a thermal runaway phenomenon caused by the oxygen emitted from the structural collapse of a cathode due to overcharge conditions, internal short-circuit or high-temperature conditions, and thus to prevent ignition and explosion of the battery.
(2) When the electrolyte containing the nitrile group-containing compound added thereto is used in a lithium secondary battery, preferably in a lithium secondary battery having a charge-cutoff voltage of 4.35V or higher, it is possible to improve high-temperature cycle characteristics and safety of the battery. However, there is a problem in that when the battery is stored at high temperature for a long time, the battery may be swelled (i.e., thickness of the battery may be increased) due to gas generation, resulting in a drop in the recovery capacity.
   On the contrary, according to the present invention, a fluorotoluene compound (for example, 2-fluorotoluene (2-FT) and/or 3-fluorotoluene (3-FT)) having a reaction potential of 4.7V or higher is used in an electrolyte in addition to the nitrile group-containing compound. Because such fluorotoluene compounds have a high reaction potential and experience little change in reaction potentials during repeated cycles, it is possible to prevent decomposition of additives at a range of between 4.35V and 4.6V and the so-called swelling phenomenon of the high-voltage battery and to minimize a drop in recovery capacity. Therefore, according to the present invention, it is possible to obtain synergy of the effects resulting from the nitrile group-containing compound with the effect of improvement in high-temperature storage characteristics.
(3) Further, When the above additives for an electrolyte are used, it is possible to reduce a contact surface area where side reactions between a cathode and electrolyte may occur in case of the battery containing only conventional electrolyte, and thus to improve the battery safety.

One additive component of the electrolyte according to the present invention is a nitrile group (-CN)-containing compound.

Particular examples of the nitrile group-containing compound that may be used include both aliphatic and aromatic nitrile group-containing compounds, mononitrile and dinitrile compounds having 1 or 2 nitrile groups being preferable. Particularly, aliphatic dinitrile compounds are preferable.

The aliphatic dinitrile compounds are C1-C12 linear or branched dinitrile compounds having one or more substituents. Non-limiting examples thereof include succinonitrile, sebaconitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 2,5-dimethyl-2,5-hexanedicarbonitrile, 2,6-dicyanoheptane, 2,7-dicyanooctane, 2,8-dicyanononane, 1,6-dicyanodecane, or the like. More particularly, succinonitrile or sebaconitrile are preferable.

The nitrile group-containing compound is used in the electrolyte in an amount depending on its solubility in the solvent for the electrolyte. However, the nitrile group-containing compound used in the electrolyte preferably in an amount of between 0.1 and 10 wt% based on 100 wt% of the electrolyte. When the compound is used in an amount of less than 0.1 wt%, it is not possible to improve battery safety significantly. On the other hand, when the compound is used in an amount of greater than 10 wt%, the viscosity of the electrolyte excessively increases, resulting in degradation in the battery quality at room temperature and low temperature.

Another additive component of the electrolyte according to the present invention is a compound having a reaction potential of 4.7V or higher. There is no particular limitation in the compound, as long as it is a compound having a reaction potential of 4.7V or higher. Preferably, the additive is a fluorotoluene (FT) compound. Non-limiting examples of fluorotoluene compounds include a monofluorotoluene, difluorotoluene, trifluorotoluene, or the like. Among those, 2-fluorotoluene (2-FT) and/or 3-fluorotoluene (3-FT) are more preferable, because they have high reaction potentials and experience little change in reaction potentials during repeated cycles.

Because 2-fluorotoluene and/or 3-fluorotoluene are physically stable and have such a high boiling point as to prevent thermal decomposition as well as a high reaction potential of 4.7V or higher (the reaction potential being higher than the reaction potential of CHB or BP by about 0.1V), they can improve high-temperature storage characteristics and safety of a battery using an electrolyte comprising them as additives, contrary to conventional additives such as CHP and BP. Additionally, because they experience little change in reaction potentials during repeated cycles, as compared to conventional fluorotoluene compounds, they can prevent degradation in cycle characteristics of a high-voltage battery.

In fact, when a fluorotoluene compound other than 2-fluorotoluene and 3-fluorotoluene, or 4-fluorotolune (4-FT) having a reaction potential similar to that of CHB is used, a battery having a charge-cutoff voltage of 4.35V or higher shows significant degradation in cycle characteristics during repeated cycles due to a reaction of a cathode active material with a fluorine atom substituted in the para-position. Therefore, it is not possible to improve the safety and high-temperature storage characteristics of a battery.

Preferably, the compound having a reaction potential of 4.7V or higher (for example, 2-FT and/or 3-FT) is added to an electrolyte in an amount of between 0.1 and 10 wt% based on 100 wt% of the total weight of electrolyte. When the compound is used in an amount of less than 0.1 wt%, it is not possible to improve the high temperature storage characteristics of a battery significantly. When the compound is used in an amount of greater than 10 wt%, there are problems in that viscosity of the electrolyte decreases and the additive causes an exothermic reaction to emit heat excessively.

The electrolyte for batteries, to which the above additive compounds are added, comprises components currently used in electrolytes, for example an electrolyte salt and organic solvent.

The electrolyte salt that may be used in the present invention includes a salt represented by the formula of A⁺B⁻, wherein A⁺ represents an alkali metal cation selected from the group consisting of Li⁺, Na⁺, K⁺ and combinations thereof, and B⁻ represents an anion selected from the group consisting of PF₆⁻, BF₄⁻, Cl⁻, Br⁻,

I⁻, ClO₄⁻, ASF₆⁻, CH₃CO₂⁻, CF₃SO₃⁻, N(CF₃SO₂)₂⁻, C(CF₂SO₂)₃⁻ and combinations thereof. Particularly, a lithium salt is preferably used.

Non-limiting examples of the organic solvent include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma-butyrolactone (GBL) or mixtures thereof.

As generally known in the art, the lithium secondary battery comprises a cathode (C), an anode (A), a electrolyte and a separator, wherein the electrolyte comprises the above-described additives.

Such lithium secondary batteries include secondary lithium metal batteries, secondary lithium ion batteries, secondary lithium polymer batteries, secondary lithium ion polymer batteries, etc. Additionally, the present invention may be applied to not only conventional lithium secondary batteries having a charge-cutoff voltage of 4.2V but also high-voltage batteries having a charge-cutoff voltage of 4.35V or higher. Particularly, high-voltage batteries having a charge-cutoff voltage of between 4.35V and 4.6V are preferable.

According to the present invention, the range of charge-cutoff voltages of the lithium secondary battery may be controlled in order to provide high-voltage batteries having a charge-cutoff voltage of 4.35V or higher, preferably of between 4.35V and 4,6V. Otherwise, cathode active materials used in the lithium secondary batteries may be doped or substituted with another element, or may be surface-treated with a chemically stable substance.

More particularly, the lithium secondary battery according to the present invention has a charge-cutoff voltage of 4.35V or higher, preferably of between 4.35V and 4.6V. When the battery has a charge-cutoff voltage of lower than 4.35V, it is substantially the same as a conventional 4.2V-battery and does not show an increase in the available capacity of a cathode active material so that a high-capacity battery cannot be designed and obtained. Additionally, when the battery has a charge-cutoff voltage of higher than 4.6V, the cathode active material used in the battery may experience a rapid change in structure due to the presence of the H13 phase generated in the cathode active material. In this case, there are problems in that transition metal is dissolved out of lithium transition metal composite oxide used as cathode active material and oxygen loss may occur. Further, as the charge-cutoff voltage increases, reactivity between the cathode and electrolyte also increases, resulting in problems including explosion of the battery.

The anode active material that may be used in the high-voltage lithium secondary battery having a charge-cutoff voltage of 4.35V or higher according to the present invention includes conventional anode active materials known to one skilled in the art(for example, materials capable of lithium ion intercalation/ deintercalation). There is no particular limitation in selection of the anode active material. Non-limiting examples of the anode active material include lithium alloys, carbonaceous materials, inorganic oxides, inorganic chalcogenides, nitrides, metal complexes or organic polymer compounds. Particularly preferred are amorphous or crystalline carbonaceous materials.

The cathode active material that may be used in the high-voltage lithium secondary battery having a charge-cutoff voltage of 4.35V or higher according to the present invention includes conventional cathode active materials known to one skilled in the art (for example, lithium-containing composite oxides having at least one element selected from the group consisting of alkali metals, alkaline earth metals, Group 13 elements, Group 14 elements, Group 15 elements, transition metals and rare earth elements). There is no particular limitation in selection of the cathode active material. Non-limiting examples of the cathode active material include various types of lithium transition metal composite oxides (for example, lithium manganese composite oxides such as LiMn₂O₄; lithium nickel oxides such as LiNiO₂; lithium cobalt oxides such as LiCoO₂; lithium iron oxides; the above-described oxides in which manganese, nickel, cobalt or iron is partially doped or substituted with other transition metals or non-transition metals (for example, A1, Mg, Zr, Fe, Zn, Ga, Si, Ge or combinations thereof); lithium-containing vanadium oxides; and chalcogenides (for example, manganese dioxide, titanium disulfide, molybdenum disulfide, etc.).

As cathode active material, lithium cobalt composite oxides optionally doped with A1, Mg, Zr, Fe, Zn, Ga, Sn, Si and/or Ge are preferable and LiCoO₂ is more preferable.

In the high-voltage battery having a charge-cutoff voltage of 4.35V or higher according to the present invention, the weight ratio (A/C) of anode active material (A) to cathode active material (C) per unit area of each electrode ranges suitably from 0.44 to 0.70 and more preferably from 0.5 to 0.64. When the weight ratio is less than 0.44, the battery is substantially the same as a conventional 4.2V-battery. Therefore, when the battery is overcharged to 4.35V or higher, the capacity balance may be broken to cause dendrite growth on the surface of anode, resulting in short-circuit in the battery and a rapid drop in the battery capacity. When the weight ratio is greater than 0.64, an excessive amount of lithium sites exists undesirably in the anode, resulting in a drop in energy density per unit volume/mass of the battery.

According to the present invention, such controlled weight ratio of anode active material to cathode active material per unit area of each electrode can be obtained preferably by using LiCoO₂, LiNiMnCoO₂ or LiNiMnO₂ having a capacity similar to that of LiCoO₂, etc., as cathode active material and using graphite as anode active material. When high-capacity cathode materials such as Ni-containing materials and/or high-capacity anode materials such as Si are used, it is possible to design and manufacture an optimized lithium secondary battery having high capacity, high output and improved safety through recalculation of the weight ratio considering a different capacity. However, the scope of the present invention is not limited to the above-mentioned cathode active materials and anode active materials.

The cathode active material used in the lithium secondary battery according to the present invention (for example, LiCoO₂) have a problem in that they are deteriorated in terms of thermal properties when being charged to 4.35V or higher. To prevent the problem, it is possible to control the specific surface area of the cathode active material.

As the particle size of the cathode active material increases (in other words, as the specific surface area of the cathode active material decreases), reactivity between the cathode active material and electrolyte may decrease, resulting in improvement in thermal stability. For this reason, it is preferable to use a cathode active material having a particle diameter larger than that of a currently used cathode active material. Therefore, the cathode active material used in the battery according to the present invention preferably has a particle diameter (particle size) of between 5 and 30 µm. When the cathode active material has a particle diameter of less than 5 µm, side reactions between the cathode and electrolyte increase to cause the problem of poor safety of the battery. When the cathode active material has a particle diameter of greater than 30 µm, reaction kinetics may be slow in the battery.

Additionally, in order to prevent the degradation of reaction kinetics in the whole battery, caused by the use of a cathode active material having a particle diameter greater than that of a currently used cathode active material, it is possible to control the loading amount of cathode active material and anode active material per unit area of each electrode.

It is preferable that the loading amount of cathode active material per unit area of cathode ranges from 10 to 30 mg/cm². When the loading amount of cathode active material is less than 10 mg/cm², the battery may be degraded in terms of capacity and efficiency. When the loading amount of cathode active material is greater than 30 mg/cm², thickness of the cathode increases, resulting in degradation of reaction kinetics in the battery. Additionally, it is preferable that the loading amount of anode active material per unit area of anode ranges from 4.4 to 21 mg/cm². When the loading amount of anode active material is less than 4.4 mg/cm², capacity balance cannot be maintained, thereby causing degradation in battery safety. When the loading amount of anode active material is greater than 21 mg/cm², an excessive amount of lithium sites is present, undesirably in the anode, resulting in a drop in energy density per unit volume/mass of the battery.

The electrode used in the battery according to the present invention can be manufactured by a conventional process known to one skilled in the art. In one embodiment, slurry for each electrode is applied onto a current collector formed of metal foil, followed by rolling and drying.

Slurry for each electrode, i.e., slurry for a cathode and an anode may be obtained by mixing the above-described cathode active material/anode active material with a binder and dispersion medium. Each of the slurry for a cathode and anode preferably contains a small amount of conductive agent.

There is no particular limitation in the conductive agent, as long as the conductive agent is an electroconductive material that experiences no chemical change in the battery using the same. Particular examples of the conductive agent that may be used include carbon black such as acetylene black, ketchen black, furnace black or thermal black; natural graphite, artificial graphite and conductive carbon fiber, etc., carbon black, graphite powder or carbon fiber being preferred.

The binder that may be used includes thermoplastic resins, thermosetting resins or combinations thereof. Among such resins, polyvinylidene difluoride (PVdF), styrene butadiene rubber (SBR) or polytetrafluoroethylene (PTFE) is preferable, PVdF being more preferable.

The dispersion medium that may be used includes aqueous dispersion media or organic dispersion media such as N-methyl-2-pyrollidone.

In both electrodes of the lithium secondary battery according to the present invention, the ratio of the thickness of cathode (C) to that of anode (A) suitably ranges from 0.7 to 1.4, more preferably from 0.8 to 1.2. When the thickness ratio is less than 0.7, loss of energy density per unit volume of the battery may occur. When the thickness ratio is greater than 1.4, reaction kinetics may be slow in the whole battery.

The lithium secondary battery according to the present invention (preferably, a high-voltage battery having charge-cutoff voltages over 4.35V) can be manufactured by a method generally known to one skilled in the.art. In one embodiment of the method, a porous separator is interposed between a cathode and anode to provide an electrode assembly, and then the electrolyte, to which the above additive components are added, is introduced thereto.

Although there is no particular limitation in the separator that may be used in the present invention, porous separators may be used. Particular examples of porous separators include polypropylene-based, polyethylene-based and polyolefin-based porous separators.

There is no particular limitation in the shape of the lithium secondary battery according to the present invention. The lithium secondary battery may be a cylindrical, prismatic, pouch-type or a coin-type battery.

### Best Mode for Carrying Out the Invention

Reference will now be made in detail to the preferred embodiments of the present invention. It is to be understood that the following examples are illustrative only and the present invention is not limited thereto.

### Example 1. Manufacture of lithium secondary battery having charge-cutoff voltage of 4.35V

### (Manufacture of cathode)

95 wt% of LiCoO₂ having a particle diameter of 10 µm, 2.5 wt% of a conductive agent and 2.5 wt% of a binder were mixed to form slurry. The slurry was applied uniformly on both surfaces of aluminum foil having a thickness of 15 µm, followed by rolling, to provide a cathode having an active material weight of 19.44 mg/cm². The finished cathode had a thickness of 128 µm.

### (Manufacture of anode)

To 95.3 wt% of graphite, 4.0 wt% of a binder and 0.7 wt% of a conductive agent were added and mixed to form slurry. The slurry was applied uniformly on both surfaces of copper foil having a thickness of 10 µm, followed by rolling, to provide an anode having an active material weight of 9.56 mg/cm². The weight ratio (A/C) of the anode active material to cathode active material per unit area of each electrode was 0.49, and the finished anode had a thickness of 130 µm.

### (Preparation of electrolyte)

To a solution containing ethylene carbonate and dimethyl carbonate in a volume ratio of 1:2 (EC:DMC), 1M LiPF₆ was dissolved, and then 3 wt% of succinonitrile and 3-fluorotoluene (3-FT) were added thereto to provide an electrolyte.

### (Manufacture of battery)

The cathode and anode obtained as described above were used to provide a prismatic battery.

### Example 2. Manufacture of lithium secondary battery having charge-cutoff voltage of 4.2V

Example 1 was repeated to provide a lithium secondary battery, except that a cathode (C) having an active material weight of 19.44 mg/cm² and an anode having an active material weight of 8.56 mg/cm² were used to adjust the weight ratio (A/C) of the anode active material to cathode active material per unit area of each electrode to 0.44.

### Examples 3-10

Example 1 was repeated to provide lithium secondary batteries, except that nitrile group-containing compounds and fluorotoluene compounds were used as described in the following Table 1.

**[Table 1]**

| | Nitrile group-containing compounds (content) | Fluorotoluene compounds (content) |
|---|---|---|
| Ex. 3 | succinonitrile 3 wt% | 3-fluorotoluene 1 wt% |
| Ex. 4 | succinonitrile 3 wt% | 2-fluorotoluene 1 wt% |
| Ex. 5 | succinonitrile 3 wt% | 3-fluorotoluene 2 wt% |
| Ex. 6 | succinonitrile 3 wt% | 2-fluorotoluene 2 wt% |
| Ex. 7 | succinonitrile 1 wt% | 3-fluorotoluene 3 wt% |
| Ex. 8 | succinonitrile 2 wt% | 3-fluorotoluene 3 wt% |
| Ex. 9 | succinonitrile 1 wt% | 2-fluorotoluene 3 wt% |
| Ex. 10 | succinonitrile 2 wt% | 2-fluorotoluene 3 wt% |

### [Comparative Examples 1-3] Manufacture of Lithium Secondary Batteries

### Comparative Example 1

Example 1 was repeated to provide a lithium secondary battery, except that neither succinonitrile nor 3-fluorotoluene was used in the electrolyte.

### Comparative Example 2

Example 1 was repeated to provide a lithium secondary battery, except that succinonitrile was used and 3-fluorotoluene was not used in the electrolyte.

### Comparative Example 3

Example 1 was repeated to provide a lithium secondary battery, except that sebaconitrile was used instead of succinonitrile and 3-fluorotoluene was not used in the electrolyte.

### Experimental Example 1. Evaluation for cycle characteristics of lithium secondary battery

The lithium secondary battery having a charge-cutoff voltage of 4.35V or higher according to the present invention was evaluated for high-temperature cycle characteristics as follows.

The lithium secondary battery using succinonitrile and 3-fluorotoluene as additives for electrolyte according to Example 1 was used as sample. As controls, the battery using no additive for electrolyte according to Comparative Example 1 and the battery using succinonitrile as additive for electrolyte according to Comparative Example 2 were used.

Each battery was tested in a charge/discharge voltage range of between 3.0V and 4.35V and was subjected to cycling under a charge/discharge current of 1C (= 880 mA). At the zone of 4.35V constant voltage, the voltage was maintained at 4.35V until the current dropped to 50 mA and the test was performed at 45°C

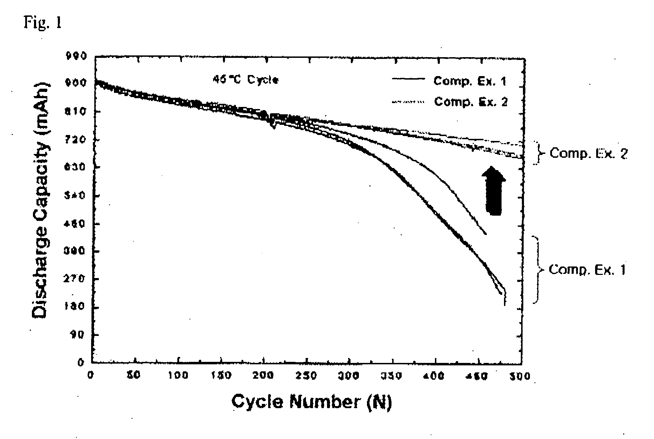

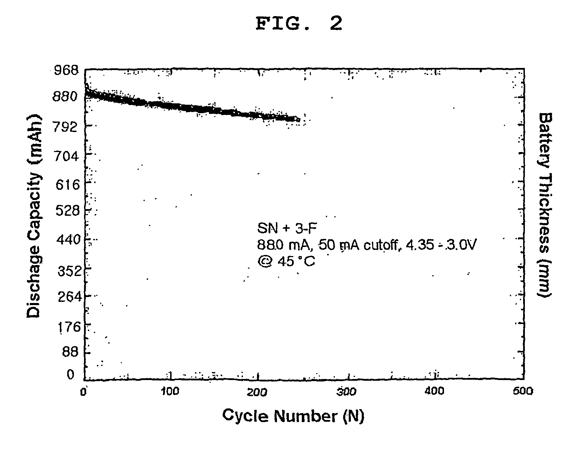

After the experiment, the lithium secondary battery using the electrolyte containing no additive according to Comparative Example 1 showed a significant drop in high-temperature cycle characteristics (see, FIG. 1). On the contrary, the batteries using the electrolyte containing succinonitrile as additive according to Example 1 (see, FIG. 2) and Comparative Example 2 (see, FIG. 1) showed improved high-temperature cycle characteristics.

### Experimental Example 2. Evaluation for safety of lithium secondary battery

The following tests were performed to evaluate the lithium secondary battery having a charge-cutoff voltage of 4.35V or higher according to the present invention for its safety.

### 2-1. Overcharge test

The lithium secondary battery using succinonitrile and 3-fluorotoluene as additives for electrolyte according to Example 1 was used as sample. As controls, the battery using no additive for electrolyte according to Comparative Example 1 and the battery using succinonitrile as additive for electrolyte according to Comparative Example 2 were used.

Each battery was charged under the conditions of 6V/1A, 12V/1A and 10V/1A and then checked.

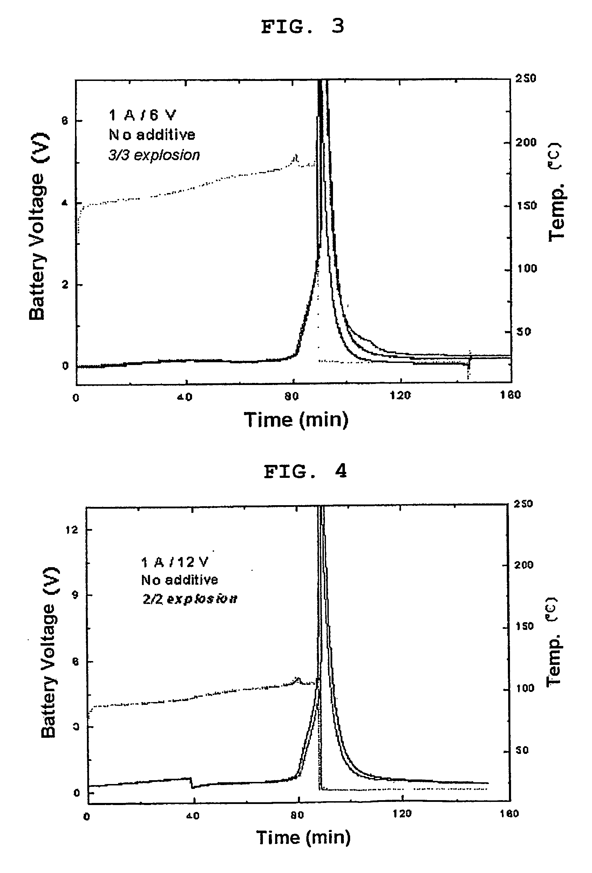

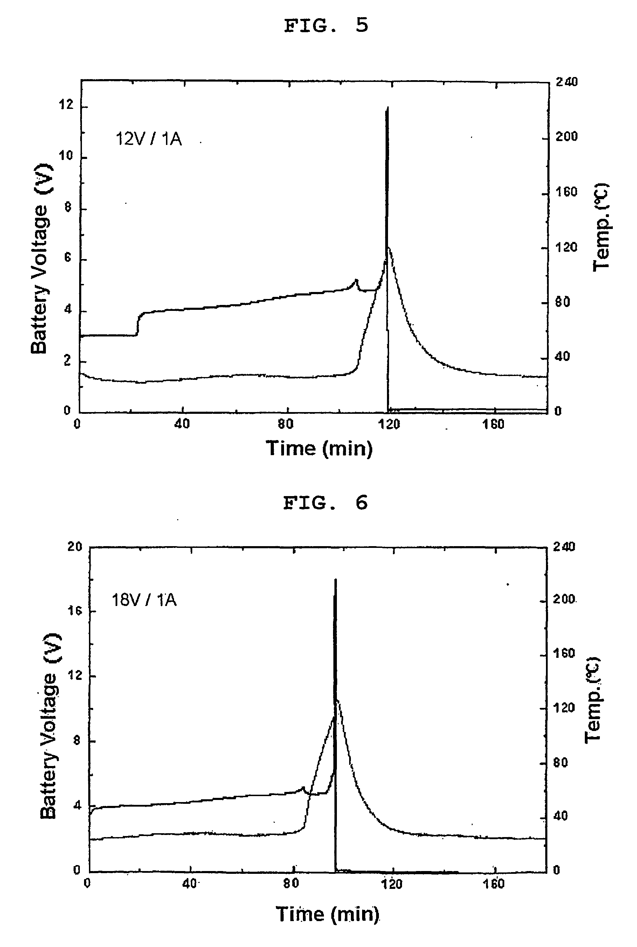

After checking, the battery using the electrolyte containing no additive for electrolyte according to Comparative Example 1 showed a rapid increase in the battery temperature under overcharge conditions, resulting in ignition and explosion of the battery (see, FIGs. 3 and 4). On the contrary, each lithium secondary battery using the electrolyte containing succinonitrile as additive showed excellent safety under overcharge conditions (see, FIGs. 5 and 6).

### 2-2. Hot box test

The lithium secondary battery using succinonitrile and 3-fluorotoluene as additives for electrolyte according to Example 1 was used as sample. As controls, the battery using no additive for electrolyte according to Comparative Example 1 and the battery using succinonitrile as additive for electrolyte according to Comparative Example 2 were used.

Each of the batteries according to Example 1 and Comparative Example 2 was charged to 4.5V under 1C for 2.5 hours and then maintained under the constant voltage condition. Then, each battery was introduced into an oven capable of convection, warmed from room temperature to a high temperature of 150°C at a rate of 5°C/min., and exposed to such high-temperature conditions for 1 hour. Additionally, each battery was checked for explosion. The battery according to Comparative Example 1 was charged to 4.4V under 1C for 2.5 hours and then maintained under the constant voltage condition, followed by the same procedure as described above.

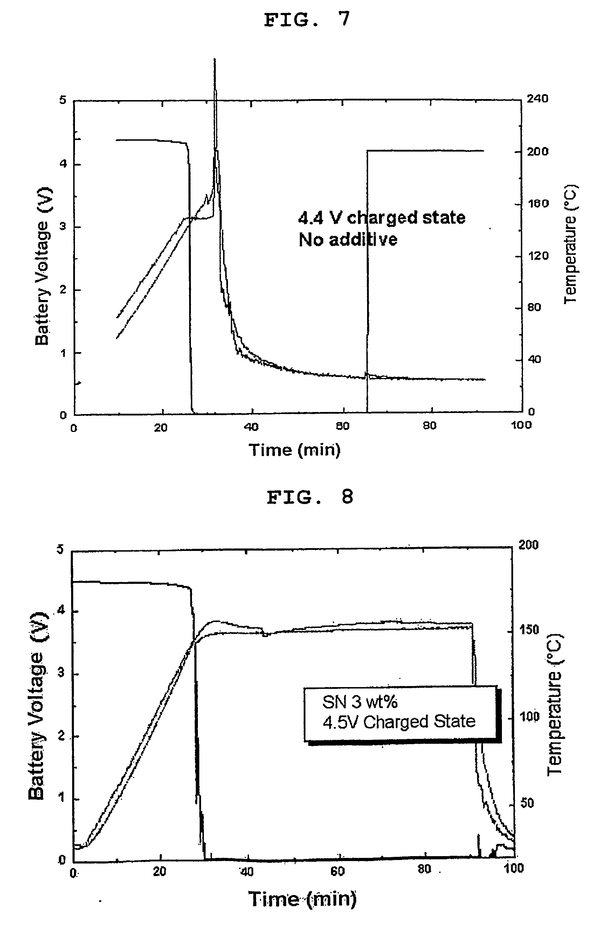

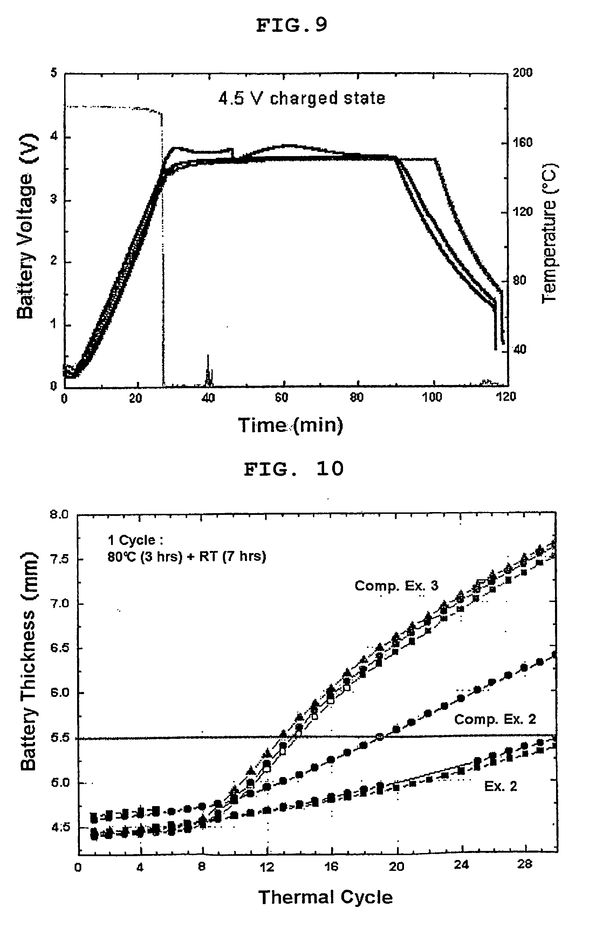

After the experiment, the lithium secondary battery according to Comparative Example 1, using no additive for electrolyte and charged to 4.4V, ignited in this hot box test (see, Table 7). On the contrary, the lithium secondary batteries using succinonitrile as additive for electrolyte according the Example 1 and Comparative Example 2 showed excellent safety even under such conditions that they were charged to 4.5V. Therefore, it can be seen that succinonitrile can contribute to the improvement of battery safety (see, FIGs. 8 and 9).

### Experimental Example 3. Evaluation for high-temperature storage characteristics of lithium secondary battery

The high-voltage lithium secondary battery having a charge-cutoff voltage of 4.35V or higher was evaluated in the following high-temperature storage tests.

### 4-1. Long-term high-temperature storage test (Siemens thermal cycle)

The lithium secondary battery using succinonitrile and 3-fluorotoluene as additives for electrolyte according to Example 1 was used as sample. As controls, the batteries using succinonitrile and sebaconitrile as additives for electrolyte according to Comparative Examples 2 and 3, respectively, were used.

Each battery was charged at a charging current of 1C to 4.35V (wherein each battery was maintained at the constant voltage until the electric current dropped to 18 mA), and was discharged to 3.1V with GSM pulse to determine the initial discharge capacity. Next, each battery was recharged to 4.35V using the same conditions as described above, and was subjected to 30 storage cycles (1 cycle= 3-hour storage at 80°C/7-hour storage at 25°C). After 30 cycles, each battery was measured for thickness, variations in open circuit voltage (OCV) and impedance. Then, each battery was discharged under GSM pulse conditions to determine the residual capacity of each battery. After measuring the residual capacity, each battery was subjected to three charge/discharge cycles and measured for the GSM recovery capacity.

After the experiment, the lithium secondary battery having a charge-cutoff voltage of 4.35V and using succinonitrile and 3-fluorotoluene as additives for electrolyte according to Example 1 showed a significantly low swelling phenomenon compared to the batteries using succinonitrile and sebaconitrile as additives for electrolyte according to Comparative Example 2 and Comparative Example 3, respectively. Therefore, the lithium secondary battery according to the present invention showed improved long-term high-temperature storage characteristics (see, FIG. 10).

### 3-2. Long-term high-temperature storage test (80°C/5 days: Siemens storage)

The lithium secondary battery using succinonitrile and 3-fluorotoluene as additives for electrolyte according to Example 1 was used as sample. As controls, the batteries using succinonitrile and sebaconitrile as additives for electrolyte according to Comparative Examples 2 and 3, respectively, were used.

Experimental Example 3-1 (Siemens thermal cycle) was repeated to measure the recovery capacity of each battery, except that each battery was stored at 80°C for 5 days.

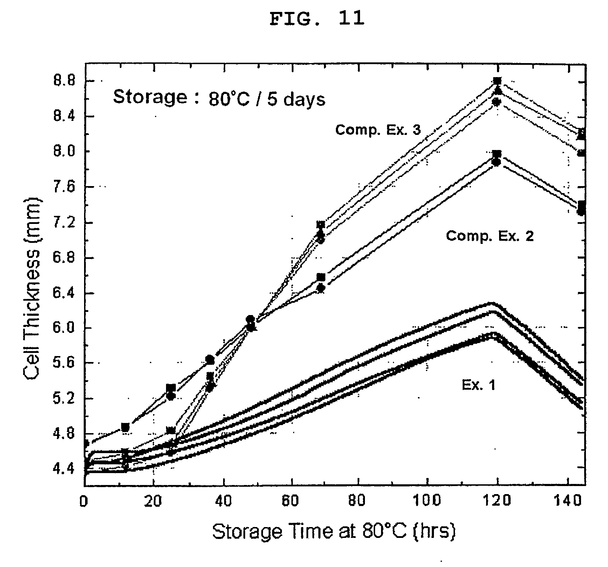

After the experiment, the batteries according to Comparative Examples 2 and 3 showed a significant battery swelling phenomenon after being stored at 80°C for 5 days (see, FIG. 11). This indicates that when a nitrile group-containing compound such as succinonitrile or sebaconitrile was used in a high-voltage battery having a charge-cutoff voltage of 4.35V or higher as additive for electrolyte, the battery shows improved safety and high-temperature cycle characteristics, however, it shows a drop in the recovery capacity because the dinitrile compound is decomposed under the high-temperature storage conditions to form a thick insulation film, resulting in a battery swelling phenomenon. On the contrary, the lithium secondary battery having a charge-cutoff voltage of 4.35V and using succinonitrile and 3-fluorotoluene as additives for electrolyte according to Example 1 showed no swelling even after being stored at 80°C for a long time (see, FIG. 11)

Therefore, it can be seen that a fluorotoluene compound having a reaction potential of 4.7V or higher can solve the problem related with high-temperature storage characteristics, caused by a nitrile group-containing compound used as additive for electrolyte in order to improve the high-temperature cycle characteristics and safety of a high-voltage battery having a charge-cutoff voltage of 4.35V or higher.

### Industrial Applicability

As can be seen from the foregoing, the lithium secondary battery according to the present invention can prevent the problems caused by a nitrile group-containing compound added to and electrolyte for the purpose of improving high-temperature cycle characteristics and safety (such problems as a battery swelling phenomenon and a drop in recovery capacity under high-temperature storage conditions), by adding a compound having a reaction potential of 4.7V or higher.

While this invention has been described in connection with what is presently considered to be the most practical and preferred embodiment, it is to be understood that the invention is not limited to the disclosed embodiment and the drawings. On the contrary, it is intended to cover various modifications and variations within the scope of the appended claims.

## Claims

1. A lithium secondary battery comprising
(i) a cathode (C) in which the cathode active material has a particle size in the range of 5 to 30 µm and is loaded in an amount of between 10 mg/cm² and 30 mglcm²;
(ii) an anode (A) in which anode active material is loaded in an amount of between 4.4 mg/cm² and 21 mg/cm²;
(iii) a separator and
(iv) an electrolyte,
wherein the electrolyte comprises:
(a) an aliphatic dinitrile compound; and
(b) at least one fluorotoluene compound selected from the group consisting of 2-fluorotoluene (2-FT) and 3-fluorotoluene (3-FT),
the aliphatic dinitrile compound is used in an amount of between 0.1 wt% and 10 wt% based on 100 wt% of the electrolyte and the fluorotoluene compound is used in an amount of between 0.1 wt% and 10 wt% based on 100 wt% of the electrolyte,
the battery has a weight ratio (A/C) of anode active material (A) to cathode active material (C) per unit area of each electrode ranges from 0.44 to 0.70, and has a ratio (A/C) of the thickness of cathode (C) to that of anode (A) ranges from 0.7 to 1.4.

2. The lithium secondary battery according to Claim 1, wherein the aliphatic dinitrile compound is succinonitrile or sebaconitrile.

3. The lithium secondary battery according to Claim 4 1, which is obtained by using a cathode active material capable of lithium intercalation/ deintercalation, the cathode active material being doped with at least one metal selected from the group consisting of Al, Mg, Zr, Fe, Zn, Sn, Si and Ge.

4. The lithium secondary battery according to Claim 1, wherein the cathode active material is a lithium-containing composite oxide comprising at least one element selected from the group consisting of alkali metals, alkaline earth metals, Group 13 elements, Group 14 elements, Group 15 elements, transition metals and rare earth elements.

## Patentansprüche

1. Lithium-Sekundärbatterie, die aufweist:
(i) eine Kathode (C), in der das aktive Kathodenmaterial eine Partikelgröße im Bereich von 5 bis 30 µm hat und mit einer Menge zwischen 10 mg/cm² und 30 mg/cm² beladen ist;
(ii) eine Anode (A), in der das aktive Anodenmaterial mit einer Menge zwischen 4,4 mg/cm² und 21 mg/cm² beladen ist;
(ii) ein Trennelement und
(iv) einen Elektrolyten,
wobei der Elektrolyt aufweist:
(a) eine aliphatische Dinitrilverbindung; und
(b) wenigstens eine Fluortoluolverbindung, die aus der Gruppe ausgewählt ist, die aus 2-Fluortoluol (2-FT) und 3-Fluortoluol (3-FT) besteht,
wobei die aliphatische Dinitrilverbindung basierend auf 100 Gewichts-% des Elektrolyten in einer Menge zwischen 0,1 Gewichts-% und 10 Gewichts-% verwendet wird und die Fluortoluolverbindung basierend auf 100 Gewichts-% des Elektrolyten in einer Menge zwischen 0,1 Gewichts-% und 10 Gewichts-% verwendet wird,
wobei die Batterie ein Gewichtsverhältnis (A/C) des aktiven Anodenmaterials (A) zu dem aktiven Kathodenmaterial (C) pro Einheitsfläche jeder Elektrode im Bereich von 0,44 bis 0,70 hat und ein Verhältnis (A/C) der Dicke der Kathode (C) zu der der Anode (A) im Bereich von 0,7 bis 1,4 hat.

2. Lithium-Sekundärbatterie nach Anspruch 1, wobei die aliphatische Dinitrilverbindung Succinonitril oder Sebaconitril ist.

3. Lithium-Sekundärbatterie nach Anspruch 1, die erhalten wird, indem ein aktives Kathodenmaterial verwendet wird, das zur Einlagerung/Auslagerung von Lithium fähig ist, wobei das aktive Kathodenmaterial mit wenigstens einem Metall dotiert ist, das aus der Gruppe ausgewählt ist, die aus Al, Mg, Zr, Fe, Zn, Sn, Si und Ge besteht.

4. Lithium-Sekundärbatterie nach Anspruch 1, wobei das aktive Kathodenmaterial eine lithiumenthaltende Oxidverbindung ist, die wenigstens ein Element aufweist, das aus der Gruppe ausgewählt ist, die aus Alkalimetallen, Erdalkalimetallen, Elementen der Gruppe 13, Elementen der Gruppe 14, Elementen der Gruppe 15, Übergangsmetallen und Seltenen-Erden-Elementen besteht.

## Revendications

1. Accumulateur au lithium comprenant :
(i) une cathode (C) dans laquelle le matériau actif de cathode possède une taille de particule située dans la plage allant de 5 µm à 30 µm et est chargé en une quantité comprise entre 10 mg/cm² et 30 mg/cm² ;
(ii) une anode (A) dans laquelle le matériau actif d'anode est chargé en une quantité comprise entre 4,4 mg/cm² et 21 mg/cm² ;
(iii) un séparateur et
(iv) un électrolyte,
dans lequel l'électrolyte comprend :
(a) un composé de dinitrile aliphatique ; et
(b) au moins un composé de fluorotoluène choisi dans le groupe constitué par le 2-fluorotoluène (2-FT) et le 3-fluorotoluène (3-FT),
le composé de dinitrile aliphatique est utilisé en une quantité comprise entre 0,1 % en poids et 10 % en poids sur la base de 100 % en poids de l'électrolyte et le composé de fluorotoluène est utilisé en quantité comprise entre 0,1 % en poids et 10 % en poids sur la base de 100 % en poids de l'électrolyte,
l'accumulateur présente un rapport pondéral (A/C) entre le matériau actif d'anode (A) et le matériau actif de cathode (C) par unité de surface de chaque électrode situé dans la plage allant de 0,44 à 0,70, et présente un rapport (A/C) entre l'épaisseur de la cathode (C) et l'épaisseur de l'anode (A) situé dans la plage allant de 0,7 à 1,4.

2. Accumulateur au lithium selon la revendication 1, dans lequel le composé de dinitrile aliphatique est le succinonitrile ou le sébaconitrile.

3. Accumulateur au lithium selon la revendication 1, lequel est obtenu en utilisant un matériau actif de cathode ayant un potentiel d'intercalation/désintercalation du lithium, le matériau actif de cathode étant dopé avec au moins un métal choisi dans le groupe constitué par Al, Mg, Zr, Fe, Zn, Sn, Si et Ge.

4. Accumulateur au lithium selon la revendication 1, dans lequel le matériau actif de cathode est un oxyde composite contenant du lithium comprenant au moins un élément choisi dans le groupe constitué par les métaux alcalins, les métaux alcalino-terreux, les éléments du groupe 13, les éléments des groupes 14, les éléments du groupe 15, les métaux de transition et les lanthanides.
